# EUROPEAN PATENT APPLICATION

(11) **EP 2 302 917 A1**
(43) Date of publication of application: **30.03.2011**
(21) Application number: 10002394.4
(22) Date of filing: 08.03.2010
(51) Int. Cl.: H04N 5/445, H04N 5/50, H04N 5/76, H04N 9/804

(54) **Video recording device and video recording method**

(30) Priority: 21.08.2009 JP 2009192145
(71) Applicant: Kabushiki Kaisha Toshiba, Minato-ku Tokyo 105-8001 (JP)
(72) Inventor: Moteki, Masataka, Tokyo (JP)
(74) Representative: HOFFMANN EITLE

(57) **Abstract**

According to one embodiment, a video recording device includes: an initial scanning module configured to perform an initial scanning process for setting viewable channels of digital terrestrial broadcast stations automatically; a channel setting module configured to use the channels of the digital terrestrial broadcast stations set by the initial scanning module for setting channels to be recorded based on a function of simultaneously recording a plurality of programs being broadcast in one and the same time zone; and a recording module configured to record the channels set to be recorded.

## Description

### BACKGROUND

### 1. Field

One embodiment of the invention relates to a video recording device and a video recording method. Particularly, it relates to a video recording technique having a function of recording a plurality of programs simultaneously.

### 2. Description of the Related Art

As a video recording device, there has been proposed a video recording device having a function of simultaneously recording a plurality of programs being broadcast in one and the same time zone by a plurality of broadcast stations, that is, a so-called multiple simultaneous recording function. For example, a technique described in Japanese Patent Application Publication (KOKAI) No, 2008-109453 is roughly a broadcast receiving/recording/reproducing device which receives all digital broadcast channels (hundreds of channels) simultaneously, records all programs for a predetermined time (e.g. of a week) in a program recording module and reproduces the programs.

A setting process is complicated because the number of broadcast stations is too large though it is necessary to initially set channels of broadcast stations to be recorded when this function is used in a general device having a limited number of tuners.

### SUMMARY

One of objects of the invention is to provide a technique for facilitating channel setting in simultaneous recording of a plurality of programs being broadcast.

According to an exemplary embodiment of the invention, there is provided a video recording device including:
an initial scanning module configured to perform an initial scanning process for setting viewable channels of digital terrestrial broadcast stations automatically;
a channel setting module configured to use the channels of the digital terrestrial broadcast stations set by the initial scanning module for setting channels to be recorded based on a function of simultaneously recording a plurality of programs being broadcast in one and the same time zone; and
a recording module configured to record the channels set to be recorded.

As described above, channel setting in simultaneous recording of a plurality of programs being broadcast can be facilitated.

### BRIEF DESCRIPTION OF THE SEVERAL VIEWS OF THE DRAWINGS

A general configuration that implements the various features of the invention will be described with reference to the drawings. The drawings and the associated descriptions are provided to illustrate embodiments of the invention and not to limit the scope of the invention.
Fig. 1 is an exemplary block diagram showing a configuration of a television apparatus having a built-in video recording device according to an embodiment of the invention;
Fig. 2 is an exemplary flow chart showing a process for performing channel setting of a multiple simultaneous recording function at the time of initial scanning of digital terrestrial broadcast channels;
Fig. 3 is an exemplary view showing an example of a setting screen for use of the multiple simultaneous recording function;
Fig. 4 is an exemplary view showing an example of a channel setting screen for the multiple simultaneous recording function;
Fig. 5 is an exemplary flow chart showing a modified example of processing for performing channel setting for the multiple simultaneous recording function at the time of initial scanning of digital terrestrial broadcast channels;
Fig. 6 is an exemplary view showing a modified example of the channel setting screen for the multiple simultaneous recording function;
Fig. 7 is an exemplary flow chart showing another modified example of processing for performing channel setting of the multiple simultaneous recording function at the time of initial scanning of digital terrestrial broadcast channels; and
Fig. 8 is an exemplary view showing another modified example of the channel setting screen for the multiple simultaneous recording function.

### DETAILED DESCRIPTION

Embodiments of the invention will be described below.

### (Embodiment 1)

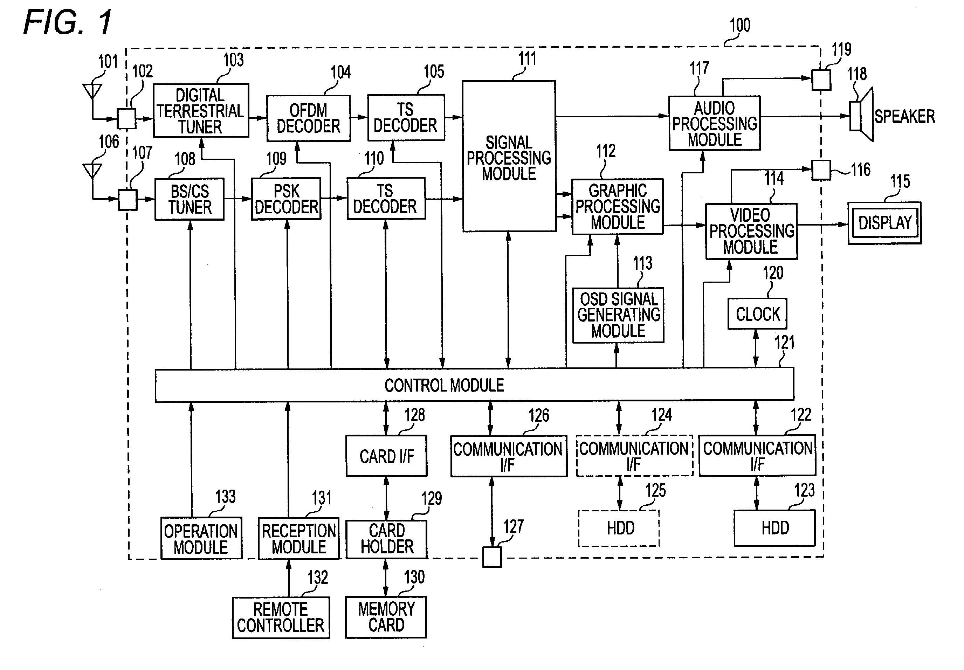

Embodiment 1 of the invention will be described with reference to Figs. 1 to 4.
Fig. 1 is a block diagram showing an embodiment of a television apparatus having a built-in video recording device according to the invention. Although this embodiment shows a device in which a hard disk is mounted as a recording medium, the hard disk may be replaced by a recording medium such as a semiconductor memory.

A digital terrestrial television broadcast signal received via a terrestrial broadcast receiving antenna 101 is fed to a digital terrestrial broadcast tuner 103 through an input terminal 102.

The digital terrestrial broadcast tuner 103 selects a broadcast signal of a desired channel based on a control signal given from a control module 121 and outputs the selected broadcast signal to an OFDM (Orthogonal Frequency Division Multiplexing) decoder 104.

The OFDM decoder 104 demodulates the broadcast signal selected by the tuner 103 based on a control signal given from the control module 121 to obtain an MPEG2 transport stream (MPEG2-TS) containing a desired program and outputs the MPEG2-TS to a TS decoder 105.

The TS decoder 105 performs a TS decoding process on the transport stream-multiplexed signal based on a control signal given from the control module 121, obtains a PES (Packetized Elementary Stream) by depacketing digital video and audio signals of the desired program and outputs the PES to a signal processing module 111. The TS decoder 105 further outputs section information obtained by the TS decoding process to the signal processing module 111.

On the other hand, a satellite digital television broadcast signal received via a BS/CS broadcast receiving antenna 106 is fed to a BS/CS digital broadcast tuner 108 through an input terminal 107.

The BS/CS digital broadcast tuner 108 selects a broadcast signal of a desired channel based on a control signal given from the control module 121 and outputs the selected broadcast signal to a PSK (Phase Shift Keying) decoder 109.

The PSK decoder 109 demodulates the broadcast signal selected by the tuner 108 based on a control signal given from the control module 121 to obtain a MPEG2 transport stream (MPEG2-TS) containing a desired program and outputs the MPEG2-TS to a TS decoder 110.

The TS decoder 110 performs a TS decoding process on the transport stream-multiplexed signal based on a control signal given from the control module 121, obtains a PES (Packetized Elementary Stream) by depacketing digital video and audio signals of the desired program and outputs the PES to the signal processing module 111. The TS decoder 110 further outputs section information obtained by the TS decoding process to the signal processing module 111.

On this occasion, the signal processing module 111 selectively performs predetermined digital signal processing on the digital video and audio signals fed from the TS decoders 105 and 110 respectively at television viewing and outputs the processed video and audio signals to a graphic processing module 112 and an audio processing module 117. The signal processing module 111 selects contents reproduction signals input from the control module 121 at reproduction of contents recorded on a built-in hard disk (HDD) or the like, performs predetermined digital signal processing on the selected signals and outputs the processed signals to the graphic processing module 112 and the audio processing module 117.

The signal processing module 111 includes a section processing module not shown. By the action of the section processing module not shown, the signal processing module 111 outputs various data and electronic program guide (EPG) information for acquiring programs, program attribute information (program genre, etc.), subtitle information, etc. (service information, SI or PSI) in section information input from the TS decoders 105 and 110 respectively, to the control module 121.

The control module 121 performs an image generating process for displaying an EPG (Electronic Program Guide) or subtitle based on the information input from the signal processing module 111 and outputs the generated image information to the graphic processing module 112.

The graphic processing module 112 combines (1) a digital video signal fed from an AV (Audio Visual) decoder not shown but included in the signal processing module 111, (2) an OSD signal generated by an OSD (On Screen Display) signal generating module 113, (3) image data due to data broadcasting and (4) an EPG or subtitle signal generated by the control module 121, and outputs a resulting composite signal to a video processing module 114. When a subtitle due to subtitle broadcasting is to be displayed, the graphic processing module 112 performs a process of superposing subtitle information on a video signal based on subtitle information controlled by the control module 121.

After the video processing module 114 converts the input digital video signal into an analog video signal of a format allowed to be displayed on a display 115, the video processing module 114 displays the analog video signal as video on the display 115 while the video processing module 114 feeds the analog video signal to the outside through an output terminal 116.

On the other hand, after the audio processing module 117 converts the input digital audio signal into an analog audio signal of a format allowed to be reproduced by a speaker 118, the audio processing module 117 outputs the analog audio signal to the speaker 118 to reproduce audio while the audio processing module 117 feeds the analog audio signal to the outside through an output terminal 119.

Here, the television apparatus 100 having the built-in video recording device is configured so that all operations of the television apparatus 100 inclusive of the aforementioned various receiving operations are generally controlled by the control module 121. The control module 121 has a built-in CPU (Central Processing Unit), etc. The control module 121 receives operation information from an operation module 133 or receives operation information sent from a remote controller 132 through a reception module 131 and controls respective modules so that the content of the operation is reflected. In this case, the control module 121 uses an ROM (Read Only Memory), an RAM (Random Access Memory) and a nonvolatile memory. Control programs mainly executed by the CPU are stored in the ROM. The RAM provides a work area to the CPU. Various types of setting information and control information are stored in the nonvolatile memory.

The control module 121 is connected to a card holder 129 in which a memory card 130 can be mounted, through a card I/F (Interface) 128. Accordingly, the control module 121 can exchange information with the memory card 130 mounted in the card holder 129, through the card I/F 128.

The control module 121 is further connected to a communication terminal 127 through a communication I/F 126. Specifically, for example, the communication I/F 126 and the communication terminal 127 are mounted as an LAN I/F and an LAN terminal or as a USB I/F and a USB terminal. Accordingly, the control module 121 can exchange information with any type device connected to the communication terminal 127, through the communication I/F 126.

The control module 121 is further connected to a built-in HDD 123 through a communication I/F 122. Accordingly, the control module 121 can exchange information with the built-in HDD 123 through the communication I/F 122. Specifically, a received broadcast program can be recorded on the built-in HDD 123 and the broadcast program recorded on the built-in HDD 123 can be reproduced to be viewed.

Incidentally, the number of HDD allowed to be connected to the television apparatus 100 having the built-in video recording device may be one or may be two or more. For example, besides the built-in HDD 123 connected through the communication I/F 122, a built-in HDD 125 may be connected separately through a communication I/F 124. The built-in HDD 123 and 125 connected thus may be handled as independent recording media respectively or may be handled as one large-capacity recording medium on the assumption that the sum of the recording capacities of the built-in HDD 123 and 125 is regarded as one recording capacity.

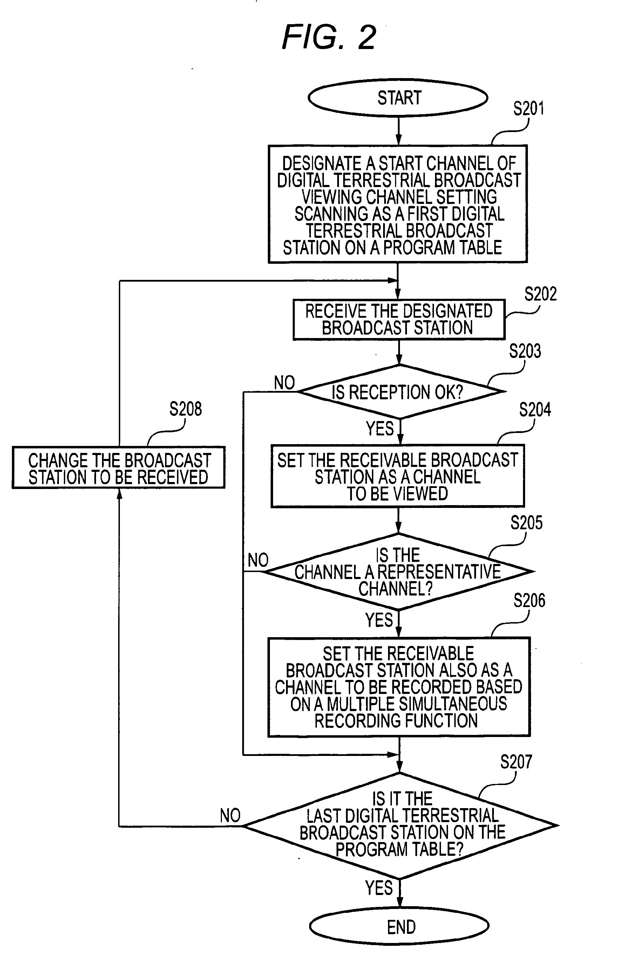

Fig. 2 is a flow chart of a process for performing channel setting of a multiple simultaneous recording function at the time of initial scanning of digital terrestrial broadcast channels.
The multiple simultaneous recording function means a function of simultaneously recording programs of different broadcast stations being broadcast in one and the same time zone. In this case, the setting process is complicated because the number of broadcast stations is too large though it is necessary to set channels of broadcast stations to be recorded.

On this occasion, in a television apparatus or a video recording/reproducing apparatus which can receive digital terrestrial broadcasts, at the start time of use of the apparatus, channel initial scanning is performed for detecting channels of digital terrestrial broadcast stations allowed to be received in an installation area of the apparatus and setting the detected channels automatically.

The flow chart of Fig. 2 shows an example in which setting of channels of broadcast stations to be recorded based on the multiple simultaneous recording function is performed together with setting of reception channels at the time of initial scanning of the digital terrestrial broadcast channels. Accordingly, the targets to be recorded based on the multiple simultaneous recording function are limited to channels of digital terrestrial broadcasts.

First in step S201, the start channel of channel scanning is designated as the first digital terrestrial broadcast station on a program table.
Then, in step S202, the designated broadcast station is received.
Successively in step S203, processing is branched based on whether the designated broadcast station can be received without any trouble or not. When the designated broadcast station cannot be received, processing skips over a series of subsequent steps S204 to S206 and goes to step S207. On the other hand, when the designated broadcast station can be received, processing goes to the following step S204.

In the step S204, the channel of the broadcast station which can be received without any trouble is set as a channel to be viewed. That is, this process is a reception channel setting process based on initial scanning of digital terrestrial broadcasts.

In the next step S205, processing is branched based on whether the channel is a representative channel or not.
In digital broadcasting, each broadcast station can transmit a plurality of programs. In this case, a three-digit channel number constituted by a combination of a two-digital number (used as upper two digits) allocated to each broadcast station and a one-digit number (used as lower one digit) for identifying one of the programs transmitted by the broadcast station is used. When the one-digit number is used for identification by each broadcast station, that is, the lowermost digit of the three-digit channel number is "1", the channel identified by the one-digit number of "1" is a representative channel of each broadcast station.

When the channel is not a representative channel, processing skips over the following step S206 and goes to step S207. On the other hand, when the channel is a representative channel, processing goes to the following step S206.

In the next step S206, the channel of the broadcast station which can be received is set also as a channel to be recorded based on the multiple simultaneous recording function. That is, the representative channel of the broadcast station set as a reception channel by initial scanning is further set as a channel to be recorded based on the multiple simultaneous recording function by processing in the step S206.

In step S207, processing is branched based on whether the broadcast station examined about receivability in the step S202 is the last digital terrestrial broadcast station on the program table or not. When the broadcast station is not the last digital terrestrial broadcast station on the program table, processing goes to step S208 in which the received broadcast station is changed and then a series of steps on and after the step S202 is repeated. On the other hand, when the broadcast station is the last digital terrestrial broadcast station on the program table, a series of steps is terminated.

As described above, a result of the channel setting by initial scanning of digital terrestrial broadcasts is diverted for the channel setting of the multiple simultaneous recording function in accordance with the procedure described with reference to the flow chart of Fig. 2, so that the additional labor required for setting channels for the multiple simultaneous recording function can be omitted to improve user-friendliness.

Moreover, channels for the multiple simultaneous recording function can be set in the same sequence as the sequence of channels displayed on the program table in accordance with the procedure described in the flow chart of Fig. 2, so that the user's sense of incompatibility can be reduced to improve user-friendliness.

In addition, a representative channel mainly used in programs sent from each broadcast station is selected in accordance with the procedure described in the flow chart of Fig. 2, so that a risk of the broadcast station being unable to be received/recorded in use of the multiple simultaneous recording function can be reduced as sufficiently as possible.

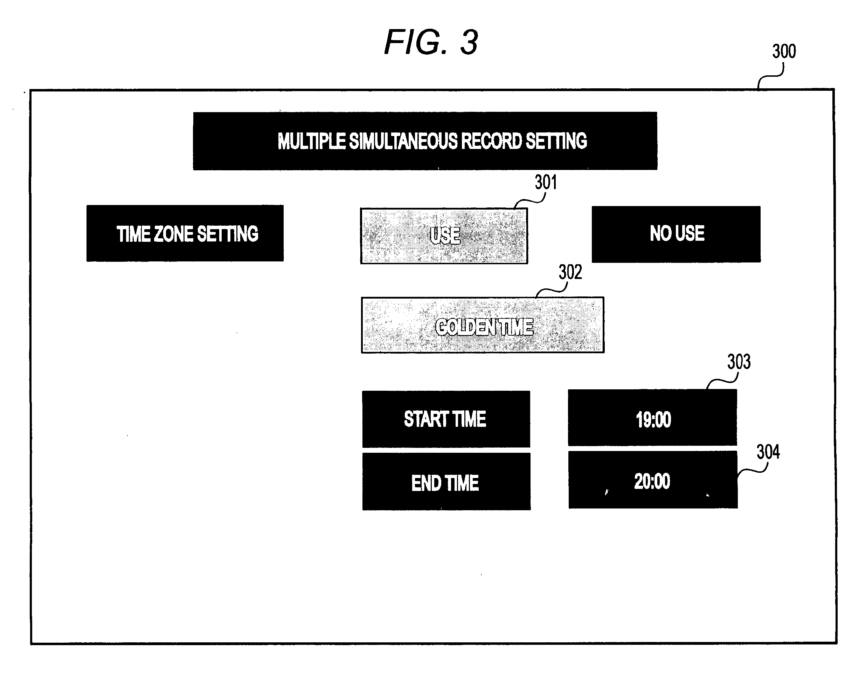

Fig. 3 is a view showing an example of a setting screen for use of the multiple simultaneous recording function.
This screen is displayed on a display, for example, by an operation of selecting a suitable menu on a menu screen in the television apparatus having the built-in video recording device according to the invention. On this screen shown in Fig. 3, setting as to whether the multiple simultaneous recording function is used or not, and setting of the time zone for executing the multiple simultaneous recording function are performed.

In the example shown in Fig. 3, use of the multiple simultaneous recording function is set when a [Use] button 301 is selected while focused on. The time zone in which the multiple simultaneous recording function will be executed is set as follows. When a [Golden Time] button 302 is selected, time zone setting is performed so that the multiple simultaneous recording function will be executed in a time zone of 19:00-20:00. It is a matter of course that the start time and the end time may be set individually regardless of this example.

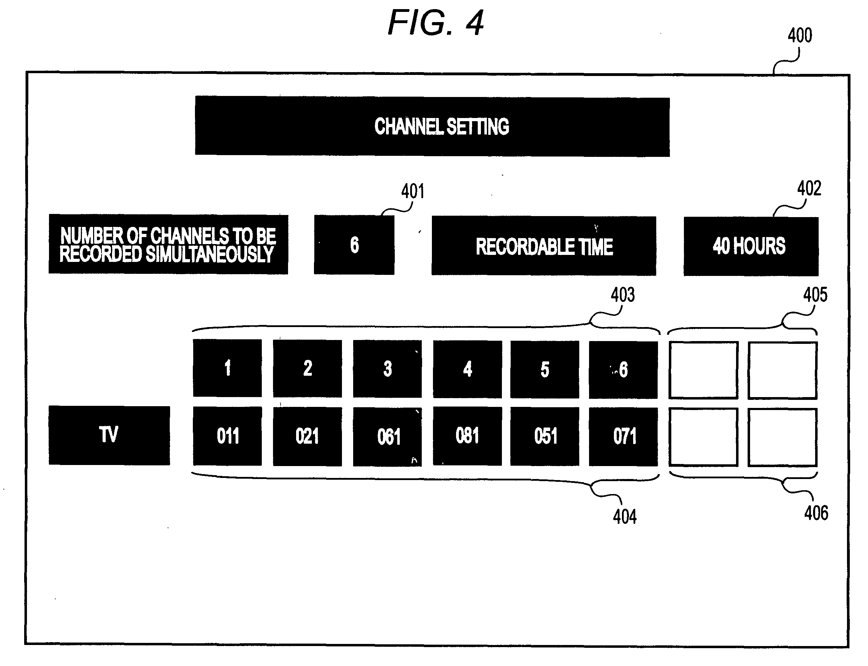

Fig. 4 is a view showing an example of a channel setting screen for the multiple simultaneous recording function.
Although channels for the multiple simultaneous recording function can be set simply when a result of the channel setting by initial scanning of digital terrestrial broadcasts is diverted for the channel setting for the multiple simultaneous recording function as described above with reference to the flow chart of Fig. 2, the user can arbitrarily change setting of channels to be recorded based on the multiple simultaneous recording function, in addition to the automatic channel setting. Fig. 4 shows an example of the screen for the operation.

In Fig. 4, it is also possible to set the number of channels to be recorded simultaneously based on the multiple simultaneous recording function. In the example shown in Fig. 4, the number of channels to be recorded simultaneously is set to "6" which is not full of the maximum number "8" of channels allowed to be recorded simultaneously.

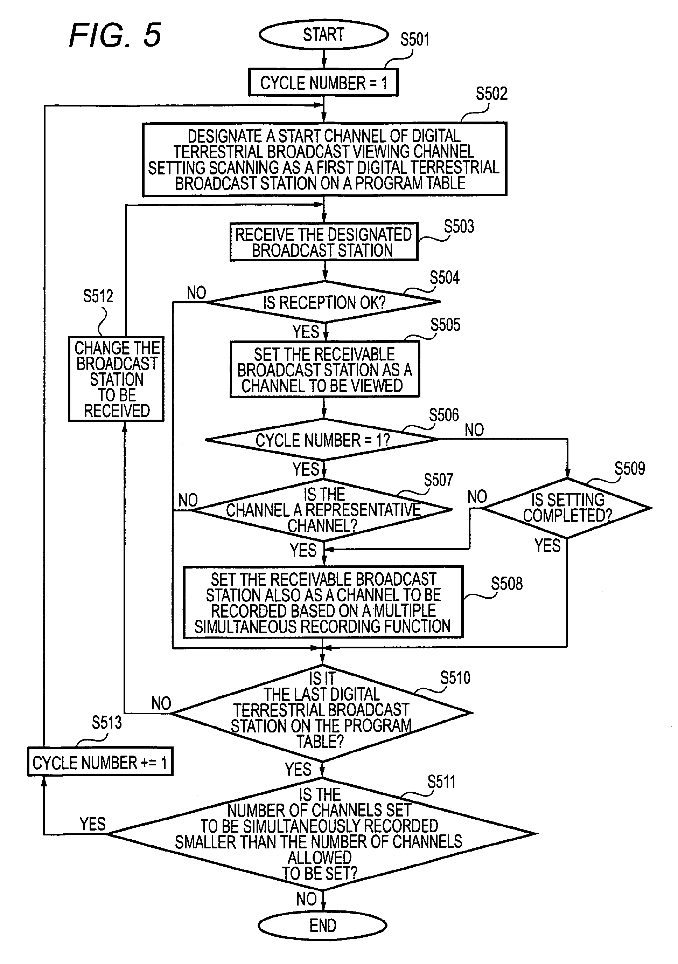

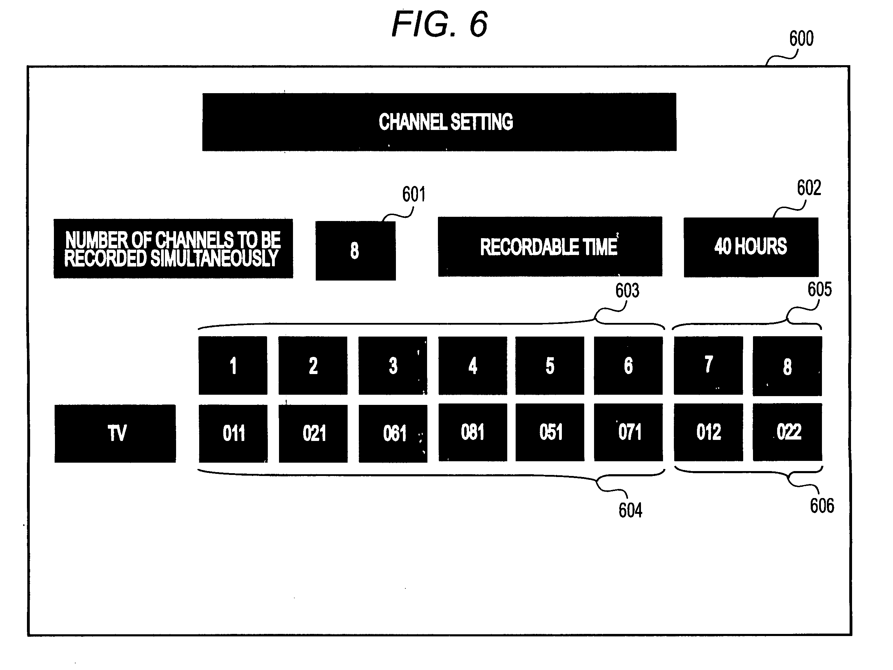

Incidentally, the time calculated based on the storage capacity of the built-in HDD and the number of channels to be recorded simultaneously is displayed as a recordable time.
(Embodiment 2)
Embodiment 2 of the invention will be described with reference to Figs. 5 and 6. Description of parts common with those in Embodiment 1 will be omitted.
Fig. 5 is a flow chart showing a modified example of processing for performing channel setting for the multiple simultaneous recording function at the time of initial scanning of digital terrestrial broadcast channels.
Although the number of channels to be recorded simultaneously based on the multiple simultaneous recording function can be set on the setting screen of Fig. 4 as described above, here will be described processing in the case where the number of channels set to be recorded based on the multiple simultaneous recording function by use of the result of initial scanning of digital terrestrial broadcast channels is smaller than the number of channels set to be recorded simultaneously on the setting screen of Fig. 4.

First, in step S501, the cycle number is set to "1".
Successively in step S502, the start channel of channel scanning is designated as the first digital terrestrial broadcast station on the program table.
Then, in step S503, the designated broadcast station is received.
Successively in step S504, processing is branched based on whether the designated broadcast station can be received without any trouble or not. When the designated broadcast station cannot be received, processing skips over a series of subsequent steps S505 to S509 and goes to step S510. On the other hand, when the designated broadcast station can be received, processing goes to the following step S505.

In the step S505, the channel of the broadcast station which can be received without any trouble is set as a channel to be viewed. That is, this process is a process of setting a reception channel by initial scanning of digital terrestrial broadcasts.

In the next step S506, processing is branched based on whether the cycle number is "1" or not. Because the cycle number is set to "1" in the step S501, the case of the cycle number = 1 (the cycle number is equal to "1") will be described here. The case of the cycle number != 1 (the cycle number is not equal to "1") will be described later.

In the case of the cycle number == 1 in the step S506, processing in the next step S507 is branched based on whether the channel is a representative channel or not. When the channel is not a representative channel, processing skips over the following step S508 and goes to step S510. On the other hand, when the channel is a representative channel, processing goes to the following step S508.

In the next step S508, the channel of the broadcast station which can be received is set also as a channel to be recorded based on the multiple simultaneous recording function. That is, the representative channel of the broadcast station set as a reception channel by initial scanning is set also as a channel to be recorded based on the multiple simultaneous recording function by processing in the step S508.

In the next step S510, processing is branched based on whether the broadcast station examined about receivability by the step S503 is the last digital terrestrial broadcast station on the program table or not. When the broadcast station is not the last digital terrestrial broadcast station on the program table, processing goes to step S512 in which the received broadcast station is changed and then a series of steps on and after the step S503 is repeated. On the other hand, when the broadcast station is the last digital terrestrial broadcast station on the program table, processing goes to the following step S511.

In the step S511, processing is branched based on whether the number of channels set as channels to be recorded based on the multiple simultaneous recording function is smaller than the number of channels set to be recorded simultaneously on the setting screen described above with reference to Fig. 4 or not.

When determination in the step S511 results in that the number of channels set as channels to be recorded based on the multiple simultaneous recording function is smaller than the number of channels set to be recorded simultaneously on the setting screen described above with reference to Fig. 4, the cycle number is incremented by one in step S513 and then a series of steps on and after the step S502 is repeated.

Assuming now that the cycle number is not smaller than 2, then attention must be paid to the fact that processing in the step S506 goes not to step S507 but to step S509 because the cycle number != 1 is determined in the step S506 as described above. That is, on and after the second cycle, there is no processing in the step 507 for determining whether the channel is a representative channel or not.

In step S509, processing is branched based on whether the channel of the broadcast station examined about receivability in the step S503 has been already set as a channel to be recorded based on the multiple simultaneous recording function in the previous or older cycle or not. When the channel has been already set as a channel to be recorded, processing skips over step S508 and goes to step S510. On the other hand, when the channel has not been set as a channel to be recorded based on the multiple simultaneous recording function, processing goes to step S508 in which the channel of the broadcast station which can be received is set also as a channel to be recorded based on the multiple simultaneous recording function.

When determination in the step S511 results in that the number of channels set as channels to be recorded based on the multiple simultaneous recording function is not smaller than the number of channels set to be recorded simultaneously on the setting screen described above with reference to Fig. 4, a series of steps is terminated.

As described above, user-friendliness can be improved because channels to be recoded based on the multiple simultaneous recording function are set in accordance with the procedure described with reference to the flow chart of Fig. 5 so that other channels than representative channels can be set in the second cycle as channels to be recorded even when representative channels of respective broadcast stations set as channels for the multiple simultaneous recording function cannot satisfy the number of channels set in Fig. 4 to be recorded simultaneously.

Fig. 6 is a view showing a modified example of the channel setting screen for the multiple simultaneous recording function.
In Fig. 6, other channels (the lowest digit of the channel number is not "1") than representative channels (the lowest digit of the channel number is "1") can be set also as channels to be recorded based on the multiple simultaneous recording function in accordance with the procedure described above with reference to the flow chart of Fig. 5 even when the number of representative channels of respective broadcast stations is smaller than the maximum number "8" of channels allowed to be recorded simultaneously based on the multiple simultaneous recording function.

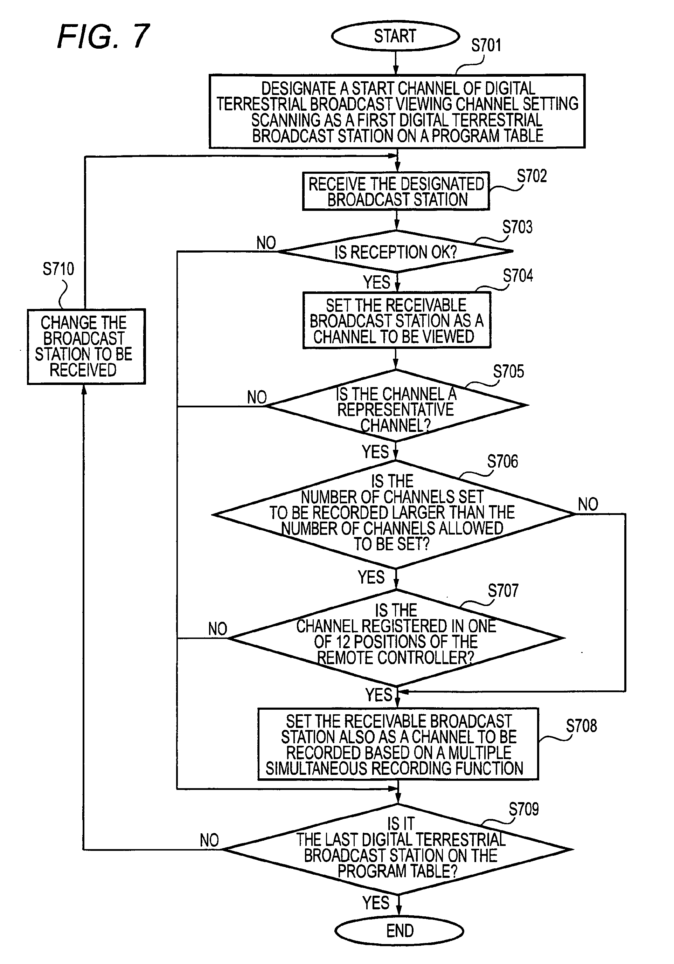

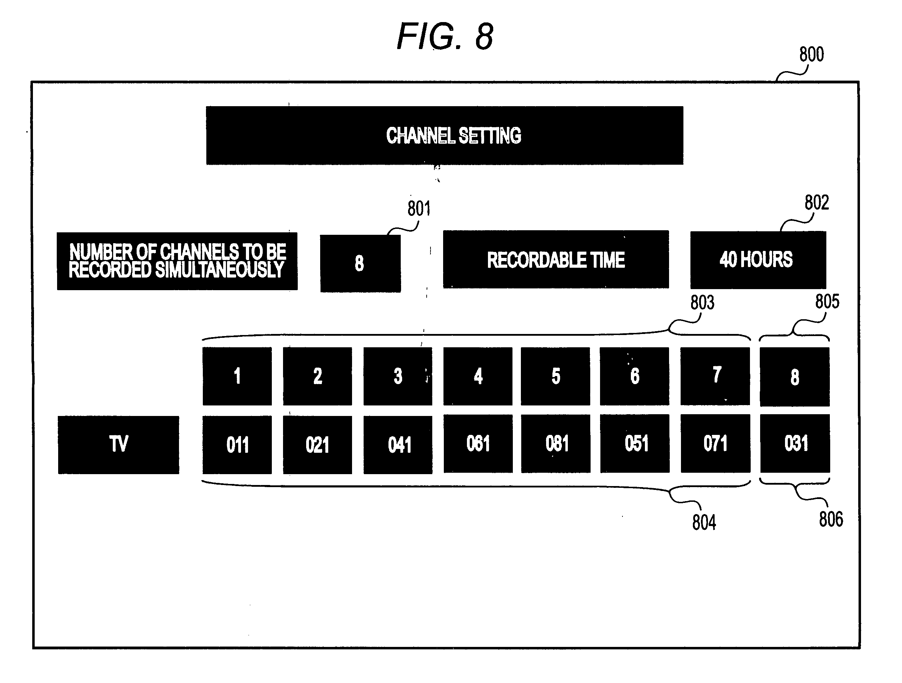

(Embodiment 3)
Embodiment 3 of the invention will be described with reference to Figs. 7 and 8. Description of parts common with those in Embodiments 1 and'2 will be omitted.
Fig. 7 is a flow chart showing another modified example of processing for performing channel setting of the multiple simultaneous recording function at the time of initial scanning of digital terrestrial broadcast channels.

Although the number of channels to be recorded simultaneously based on the multiple simultaneous recording function can be set on the setting screen of Fig. 4 as described above, here is described processing in the case where the number of channels set to be recorded based on the multiple simultaneous recording function by use of the result of initial scanning of digital terrestrial broadcast channels is larger than the number of channels set on the setting screen of Fig. 4 to be recorded simultaneously.

First, in step S701, the start channel of channel scanning is designated as the first digital terrestrial broadcast station on the program table.
Then, in step S702, the designated broadcast station is received.
Successively in step S703, processing is branched based on whether the designated broadcast station can be received without any trouble or not. When the designated broadcast station cannot be received, processing skips over a series of subsequent steps S704 to S708 and goes to step S709. On the other hand, when the designated broadcast station can be received, processing goes to the following step S704.

In the step S704, the channel of the broadcast station which can be received without any trouble is set as a channel to be viewed. That is, this process is a process of setting a reception channel by initial scanning of digital terrestrial broadcasts.

In the next step S705, processing is branched based on whether the channel is a representative channel or not.
When the channel is not a representative channel, processing skips over a series of subsequent steps S706 to S708 and goes to step S709. On the other hand, when the channel is a representative channel, processing goes to the following step S706.

In the step S706, processing is branched based on whether the number of channels already set to be recorded based on the multiple simultaneous recording function is larger than the number of channels set on the setting screen of Fig. 4 to be recorded simultaneously or not. When the number of channels already set is not larger, processing skips over the following step S707 and goes to step S708. On the other hand, when the number of channels already set is larger, processing goes to the following step S707.

On this occasion, channel buttons associated with digital terrestrial broadcast stations respectively from the era of analog broadcasting are usually provided in a remote controller of a television apparatus, so that the user can change the broadcast station to be viewed by a simple one-button operation. Even at present, 12 positions Nos. 1 to 12 of channel buttons are associated with digital terrestrial broadcast stations respectively to implement the same simple broadcast station changing operation as in the era of analog broadcasting. Generally, local broadcast stations such as homegrown independent UHF broadcast stations in addition to national network key broadcast stations are allocated to the 12-position channel buttons. As a sphere of initial setting in use of a television apparatus, area information of the installation place of the television apparatus is set so that homegrown local broadcast stations can be allocated to the 12-position channel buttons of a remote controller based on the area information.

In the step S707, processing is branched based on whether the channel of the broadcast station examined about receivability in the step S702 is registered in one of the 12 positions of the remote controller or not. When the channel is not registered, processing skips over the following step S708 and goes to step S709. On the other hand, when the channel is registered, processing goes to the following step 5708.

In the next step S708, the channel of the broadcast station which can be received is set also as a channel to be recorded based on the multiple simultaneous recording function. That is, the representative channel of the broadcast station set as a reception channel by initial scanning is set also as a channel to be recorded based on the multiple simultaneous recording function by processing in the step S708.

In step S709, processing is branched based on whether the broadcast station examined about receivability in the step S702 is the last digital terrestrial broadcast station on the program table or not. When the broadcast station is not the last digital terrestrial broadcast station on the program table, processing goes to step S710 in which the received broadcast station is changed and then a series of steps on and after the step S702 is repeated. On the other hand, when the broadcast station is the last digital terrestrial broadcast station on the program table, a series of steps is terminated.

As described above, user-friendliness can be improved because channels to be recorded based on the multiple simultaneous recording function are set in accordance with the procedure described with reference to the flow chart of Fig. 7 so that the channels to be recoded can be set by reasonable channel selection such as preferential selection of homegrown independent UHF stations in accordance with the broadcast station channels registered in the channel buttons of the remote controller even when the number of channels set for the multiple simultaneous recording function from representative channels of respective broadcast stations is larger than the number of channels set in Fig. 4 to be recorded simultaneously.

Fig. 8 is a view showing another modified example of the channel setting screen for the multiple simultaneous recording function.
In Fig. 8, the number of channels to be recorded simultaneously can be set by reasonable channel selection such as preferential selection of homegrown independent UHF stations so that the number of channels thus set is not larger than the maximum number "8" of channels allowed to be recorded simultaneously based on the multiple simultaneous recording function though there is a possibility that the number of channels larger than the maximum number "8" will be set.

As described above, when the result of the channel setting by initial scanning in the video recording device is diverted as a default for the channel setting of the multiple simultaneous recording function as described above with reference to the drawings, the additional labor required for setting a plurality of channels for the multiple simultaneous recording function can be omitted as an effect of each embodiment to thereby improve user-friendliness.

Incidentally, the invention is not limited to the aforementioned embodiment per se and constituent members may be changed or modified for embodying the invention without departing from the gist of the invention in a practical stage. Constituent members disclosed in the aforementioned embodiment may be combined suitably to form various inventions. For example, some of all constituent members disclosed in the embodiment may be removed. In addition, constituent members disclosed in different embodiments may be combined suitably.

## Claims

1. A video recording device comprising:
an initial scanning module configured to perform an initial scanning process for setting viewable channels of digital terrestrial broadcast stations automatically;
a channel setting module configured to use the channels of the digital terrestrial broadcast stations set by the initial scanning module for setting channels to be recorded based on a function of simultaneously recording a plurality of programs being broadcast in one and the same time zone; and
a recording module configured to record the channels set to be recorded.

2. The device of Claim 1, wherein the channel setting module sets channels to be recorded in accordance with an arrangement sequence of broadcast stations on an electronic program guide table at the time of setting the channels to be recorded based on the function of simultaneously recording the plurality of programs being broadcast in the one and the same time zone.

3. The device of Claim 1, wherein the channel setting module selects and sets representative channels of respective broadcast stations at the time of setting the channels to be recorded based on the function of simultaneously recording the plurality of programs being broadcast in the one and the same time zone.

4. The device of Claim 1, wherein the channel setting module sets other channels than representative channels of respective broadcast stations also as channels to be recorded based on the function of simultaneously recording the plurality of programs being broadcast in the one and the same time zone when the number of channels allowed to be set to be recorded based on the simultaneous recording function is a predetermined number and the number of channels set to be recorded based on the simultaneous recording function by execution of the procedure described in Claim 1 is smaller than the predetermined number.

5. The device of Claim 1, wherein the channel setting module sets channels of broadcast stations registered in channel buttons of a remote controller of the video recording device as channels to be recorded based on the function of simultaneously recording the plurality of programs being broadcast in the one and the same time zone when the number of channels allowed to be set to be recorded based on the simultaneous recording function is a predetermined number and the number of channels set to be recorded based on the simultaneous recording function by execution of the procedure described in Claim 1 is larger than the predetermined number.

6. The device of Claim 1 further comprising:
a tuner configured to select a channel of a digital terrestrial broadcast.

7. A video recording method comprising:
performing an initial scanning process for setting viewable channels of digital terrestrial broadcast stations automatically;
using the channels of the digital terrestrial broadcast stations set by the initial scanning process for setting channels to be recorded based on a function of simultaneously recording a plurality of programs being broadcast in one and the same time zone; and
recording the channels set to be recorded.
